# EUROPÄISCHE PATENTSCHRIFT

(11) **EP 1 103 013 B1**
(45) Veröffentlichungstag und Bekanntmachung des Hinweises auf die Patenterteilung: **31.07.2002**
(21) Anmeldenummer: 00938821.6
(22) Anmeldetag: 17.05.2000
(51) Int. Cl.: G02B 6/44

(54) **VERFAHREN ZUR HERSTELLUNG EINES OPTISCHEN KABELS MIT ÜBERLÄNGE DER LICHTWELLENLEITER**
METHOD OF PRODUCING AN OPTICAL CABLE WITH AN EXCESSIVE LENGTH OF THE OPTICAL WAVEGUIDES
PROCEDE POUR FABRIQUER UN CABLE OPTIQUE AVEC UNE SURLONGUEUR DES GUIDES D'ONDES OPTIQUES

(30) Priorität: 09.06.1999 DE 19926267
(43) Veröffentlichungstag der Anmeldung: 30.05.2001
(73) Patentinhaber: Nexans Deutschland Industries AG & Co KG., 41238 Mönchengladbach (DE)
(72) Erfinder: STASCHEWSKI, Harry, D-30853 Langenhagen (DE)
(74) Vertreter: Döring, Roger, Dipl.-Ing.
(86) Internationale Anmeldenummer: EP0005931
(87) Internationale Veröffentlichungsnummer: WO0077552

(56) Entgegenhaltungen:
- DE-A- 2 331 757
- DE-A- 3 309 996
- DE-A- 4 003 311
- DE-A- 4 400 824
- DE-A- 19 642 542
- GB-A- 2 331 160
- US-A- 4 232 935

## Beschreibung

Die Erfindung betrifft ein Verfahren zur Herstellung eines optischen Kabels oder eines Aufbauelementes für ein optisches Kabel nach dem Oberbegriff des Anspruchs 1.

Ein Verfahren zur Einstellung der Überlänge einer mindestens einen Lichtwellenleiter enthaltenden optischen Leitung gegenüber einer als Metallröhrchen ausgebildeten Umhüllung ist aus der DE 39 10 122 bekannt. Das Metallröhrchen wird hierbei durch eine plastisch verformende Biegevorrichtung gezogen und anschließend wieder geradegerichtet. Die dieser Veröffentlichung zugrunde liegende Idee besteht darin, daß die Grenze der elastischen Längenänderung bei Zugbelastung erheblich höher als bei Druckbelastung ist. Das Metallröhrchen verformt sich also im äußeren Krümmungsbereich nur elastisch, im Innern dagegen auch plastisch, so daß eine resultierende Verkürzung des geradegerichteten Metallröhrchens entsteht. Die durch dieses Verfahren erzielbare Überlänge ist auf weniger als 0,3 % begrenzt.

Aus der DE 40 03 311 ist es bekannt, die Überlänge dadurch herzustellen, daß das zum Rohr zu formende Band oder ein bestimmter Rohrabschnitt reversibel gelängt und die Lichtwellenleiter im Bereich des gelängten Rohrabschnitts in das sich bildende Rohr eingeführt werden. Das Metallband bzw. der Rohrabschnitt wird über die Umgebungstemperatur erwärmt und abschließend abgekühlt, wobei sich das Rohr verkürzt. Auch mit diesem Verfahren sind Überlängen von mehr als 0,3 % nicht zu erreichen, da eine zu hohe Erwärmung die Lichtwellenleiter in Mitleidenschaft ziehen würde.

Aus der DE 42 10 633 ist ein Verfahren zur Herstellung der Überlänge bekannt, bei dem das die Lichtwellenleiter enthaltende Metallrohr gestaucht wird und dabei derart plastisch verkürzt wird, daß die Lichtwellenleiter mit einer definierten Überlänge in dem gestauchten Metallrohr zu liegen kommen. Mit diesem Verfahren sind zwar Überlängen zwischen 1 und 8 % möglich, jedoch ist der hierfür erforderliche Aufwand erheblich, so daß eine wirtschaftliche Fertigung nahezu ausgeschlossen ist.

Schließlich ist aus der DE 44 34 133 ein Verfahren zur Herstellung eines optischen Kabels bekannt, bei dem die Überlänge der Lichtwellenleiter dadurch erzeugt wird, daß das Metallrohr mit zumindest einer Windung um eine Abzugsscheibe herumgelegt wird und die Kraft, mit welcher die Abzugsscheibe an dem Metallrohr angreift, eine elastische Verformung von bis zu 0,6 % bewirkt. Die elastische Dehnung des Metallrohres wird auf der Abzugsscheibe aufgehoben.

Aus US 4232935 ist ein Verfahren zur Herstellung eines optischen Kabels bekannt, bei dem ein Metallband zu einem Schlitzrohr geformt wird, in das noch offene Schlitzrohr mehrere Lichtwellenleiter eingebracht werden, der Längsschlitz des Schlitzrohres verschweißt und das geschweißte Rohr mit einer Wellung versehen wird. Die Überlänge der Lichtwellenleiter in dem Metallrohr wird dadurch hergestellt, daß die Lichtwellenleiter mit einer höheren Geschwindigkeit zugeführt werden als das Metallband (Spalte 3, Zeilen 28 - 40, Spalte 3, Zeilen 41 - 45). Eine Abzugsscheibe, hinter welcher das Metallrohr gewellt wird, ist hier nicht erwähnt.

Aus DE 3309996 ist ein Verfahren zur Herstellung eines Grundelementes für ein Nachrichtenkabel mit Lichtwellenleitern bekannt. Wie bei US 4232935 wird ein Metallband zu einem Rohr mit Längsschlitz geformt, und der Längsschlitz verschweißt. Der oder die Lichtwellenleiter werden während der Formung des Rohres aus dem Metallband zumindest punktweise mit dem Metallband verbunden. Das geschweißte Rohr wird mit Kerben versehen, die das Rohr verkürzen. Die Lichtwellenleiter werden dabei zwischen den Befestigungspunkten wellenförmig angeordnet, so daß sich eine Überlänge der Lichtwellenleiter gegenüber dem Metallrohr ergibt. Auch DE 3309996 zeigt keine Abzugsscheibe, hinter welcher das Metallrohre mit Sicken, Eindellungen oder einer Wellung versehen wird.

DE 4400824 beschreibt ein Verfahren zur Längenmessung eines langgestreckten Übertragungselementes aus einem Metallrohr mit Lichtwellenleitern. Bei diesem Verfahren wird die Überlänge der Lichtwellenleiter dadurch hergestellt, daß die Lichtwellenleiter miteinander verseilt werden (Spalte 2, Zeile 51) oder mit einer höheren Geschwindigkeit als das Metallband zugeführt werden (Spalte 3, Zeile 7ff). Das Metallrohr wird mit Markierungen versehen, um das Verhältnis der eingefahrenen Länge der Lichtwellenleiter zur Länge des Metallbandes zu kennzeichnen. Die Kennzeichnungsmittel können auch ringförmige Sicken oder eine ringförmige Wellung sein.

Der Erfindung liegt die Aufgabe zugrunde, ein Verfahren zur Herstellung eines einen oder mehrere Lichtwellenleiter enthaltenden Metallrohres herzustellen, wobei eine nahezu beliebig einstellbare Überlänge der Lichtwellenleiter gegenüber dem Metallrohr erzielbar ist.

Diese Aufgabe wird durch die im Kennzeichen des Anspruchs 1 erfaßten Merkmale gelost.

Weitere vorteilhafte Ausgestaltungen der Erfindung sind in den Unteransprüchen erfaßt.

Die Erfindung ist an Hand der in den Figuren 1 bis 3 schematisch dargestellten Ausführungsbeispiele näher erläutert.

Die Fig. 1 zeigt eine perspektivische Ansicht eines Teils eines nach der Lehre der Erfindung hergestellten optischen Kabels.

Die Figur 2 zeigt eine seitliche Ansicht einer Vorrichtung zur Durchführung des erfindungsgemäßen Verfahrens.

Die Figur 3 zeigt ein besonders vorteilhaftes Anwendungsbeispiel für ein optisches Element, welches nach der Lehre der Erfindung hergestellt ist.

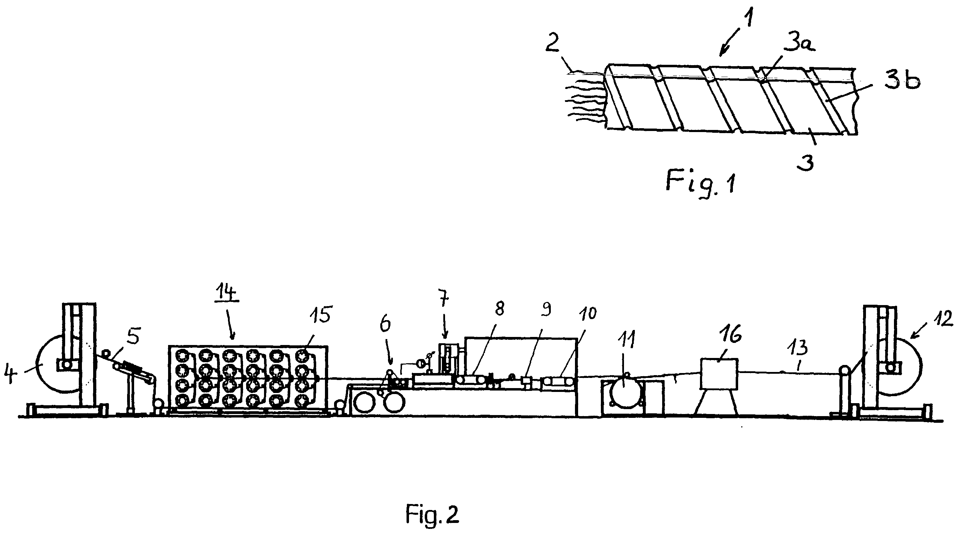

Die Fig. 1 zeigt eine perspektivische Ansicht eines Teils eines nach der Lehre der Erfindung hergestellten optischen Kabels. Das optische Kabel 1 besteht aus den Lichtwellenleitern 2 und dem die Lichtwellenleiter 2 umgebenden Metallrohr 3, welches eine Längsschweißnaht 3a aufweist. Der Freiraum zwischen den Lichtwellenleitern 2 und dem Metallrohr 3 kann mit einem sogenannten Petroleumjelly ausgefüllt sein, um eine Längswasserwanderung zu verhindern. Die Anzahl der Lichtwellenleiter 2 liegt üblicherweise zwischen 6 und 20 kann jedoch bis zu 144 betragen. Das Metallrohr 3 weist eine schraubenlinienförmige Wellung 3b auf, durch welche das Metallrohr 3 gegenüber dem glatten Rohr verkürzt ist. Dadurch haben die Lichtwellenleiter 2 eine größere Länge als das Metallrohr 3, verlaufen also wellen-, wendel- oder sinusförmig in dem Metallrohr 3. Die Überlänge kann bis zu 5 % betragen, beträgt aber vorzugsweise zwischen 0,5 und 1 %. Die Wanddicke S des Metallrohres beträgt z. B. 1 mm während sein Außendurchmesser 6 mm beträgt. Als Material für das Metallrohr 3 wird Aluminium bevorzugt.

Die Figur 2 zeigt eine seitliche Ansicht einer Vorrichtung zur Durchführung des erfindungsgemäßen Verfahrens.

Von einer Vorratsspule 4 wird ein Band 5 kontinuierlich abgezogen und einer Formvorrichtung 6 zugeführt, in der das Band 5 zu einem Rohr mit Längsschlitz geformt wird. Teil dieser Formvorrichtung 6 ist eine nicht näher bezeichnete Besäumeinrichtung, in welcher das Band 5 exakt auf die benötigte Breite geschnitten wird. Die Formeinrichtung 6 besteht weiterhin aus mehreren nicht näher bezeichneten Formrollensötzen. Der Längsschlitz des geformten Rohres wird mittels einer Laserschweißeinrichtung 7 geschlossen. Für die exakte Führung des geschlitzten Rohres unterhalb der Schweißeinrichtung 7 sorgt ein erster Spannbackenabzug 8, der aus einer Vielzahl das Rohr umfassender Spannbackenpaare besteht, die über eine endlose Kette angetrieben sind. Hinter dem ersten Spannbackenabzug 8 ist eine Rohrreduziereinrichtung 9 z. B. eine Ziehmatrize angeordnet, in welcher der Durchmesser des Rohres verringert wird. Ein zweiter Spannbackenabzug 10 ist hinter der Rohrreduziereinrichtung 9 angeordnet, der an dem gezogenen Rohr angreift und dieses durch die Ziehmatrize zieht. Die Abzugsgeschwindigkeit des zweiten Spannbackenabzuges 10 ist gegenüber der Abzugsgeschwindigkeit des ersten Spannbackenabzugs 8 in Abhängigkeit vom Durchhang des Rohres zwischen der Ziehmatrize und dem ersten Spannbackenabzug 8 geregelt. Hinter dem zweiten Spannbackenabzug 10 befindet sich eine angetriebene Abzugsscheibe 11 auf deren Umfangsfläche das Rohr mit mehreren Windungen aufliegt. Die Abzugsscheibe 11 ist mit einer Abzugsgeschwindigkeit angetrieben, welche gleich der Abzugsgeschwindigkeit des zweiten Spannbackenabzugs 10 ist.

Mit 14 ist eine Ablaufvorrichtung für eine Vielzahl von Lichtwellenleitern 2 bezeichnet, die mit einer Vielzahl von Spulen 15 bestückt ist, auf welche die Lichtwellenleiter 2 aufgewickelt sind.

Die Lichtwellenleiter 2 werden von den Spulen 15 abgezogen und in das noch offene Rohr vor der Schweißeinrichtung eingeführt. Als Schutz für die empfindlichen Lichtwellenleiter 2 ragt ein nicht dargestelltes ortsfestes Metallröhrchen in das Schlitzrohr, durch dessen Inneres die Lichtwellenleiter 2 hindurchgeleitet werden. Das Metallröhrchen gibt die Lichtwellenleiter 2 frühestens hinter der Schweißeinrichtung 7 frei. Das Metallröhrchen ist in konzentrischer Anordnung von einem weiteren Metallröhrchen umgeben. Durch den von den beiden konzentrischen Metallröhrchen gebildeten Ringspalt wird unter Druck ein Petroleumjelly in das Rohr eingefüllt.

In dem auf die Abzugsscheibe 11 aufgewickelten Rohrabschnitt ist die Länge der Lichtwellenleiter 2 und die Länge des Metallrohres 3 gleich groß.

Um nun die Überlänge der Lichtwellenleiter 2 gegenüber dem Metallrohr 3 herzustellen, ist hinter der Anzugsscheibe 11 eine Wellvorrichtung 16 angeordnet, die in kontinuierlicher Arbeitsweise eine Wellung in die Wandung des Rohres eindrückt. Die Überlänge der Lichtwellenleiter 2 ist abhängig von der Tiefe der Wellung sowie der Steigung der Wellung.

Anstelle der Wellvorrichtung 16 kann auch eine Sickvorrichtung vorgesehen sein, die mehrere Sicken in die Rohrwandung einformt, wobei mehrere Sicken in Umfangsrichtung eine in sich geschlossene Sicke bilden. Die Überlänge ist in diesem Fall abhängig von der Tiefe bzw. der Form der Sicke sowie vom Abstand der Sicken voneinander. Die Überlänge läßt sich bei dem erfindungsgemäßen Verfahren exakt einstellen.

Um eine Torsion des Metallrohres durch den umlaufenden Weller der Wellvorrichtung zu verhindern, kann vor der Wellvorrichtung noch ein weiterer nicht dargestellter Spannzangenabzug vorgesehen sein. Die Geschwindigkeit der Wellvorrichtung 16 bzw. der Sickvorrichtung kann durch vor und/oder hinter der Wellvorrichtung 16 angeordnete Tänzer geregelt werden.

Das fertige Metallrohr 13 mit den Lichtwellenleitern 2 darin wird abschließend auf eine Aufwickeltrommel 12 aufgewickelt.

In dem dargestellten Ausführungsbeispiel wird das Metallrohr im gleichen Arbeitsgang wie die Herstellung des Rohres gewellt und gesickt.

Es besteht jedoch die Möglichkeit, ein glattes Rohr zunächst ohne Wellung herzustellen und dieses auf die Aufwickeltrommel 12 aufzuwickeln. Lichtwellenleiter 2 und Metallrohr weisen dann die gleiche Länge auf. In einem nachfolgenden Arbeitsgang kann dann die Wellung oder Sickung in die Rohrwandung eingeformt werden, um die Überlänge der Lichtwellenleiter 2 zu erzeugen.

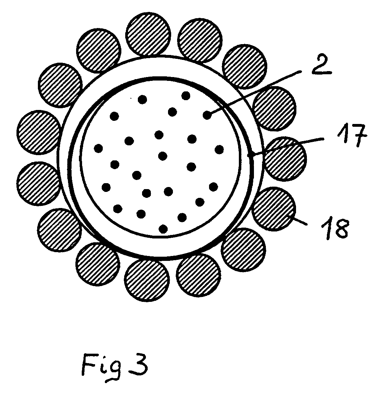

Die Figur 3 zeigt ein besonders vorteilhaftes Anwendungsbeispiel für ein optisches Element, welches nach der Lehre der Erfindung hergestellt ist.

Die Figur zeigt ein besonders kostengünstig herstellbares Erdseilkabel, bei welchem im Zentrum des Erdseilkabels ein leicht gewelltes Aluminiumrohr 17 angeordnet ist, in welchem bis zu 144 Lichtwellenleiter 2 mit einer Überlänge von mindestens 0,5 % vorliegen. Eine Lage von Stahldrähten 18, die an ihrer äußeren Oberfläche eine Aluminiumschicht aufweisen, ist auf das zentrale Aluminiumrohr 17 aufgeseilt.

Aufgrund der Wellung bzw. Sickung des Aluminiumrohres 17 ist dessen Querdrucksteifigkeit höher als bei einem glatten Aluminiumrohr, so daß bei einer bestimmten geforderten Querdrucksteifigkeit für ein Aluminiumrohr gemäß der Lehre der Erfindung eine geringere Wanddicke verwendet werden kann. Als Beispiel für ein gewelltes Aluminiumrohr seien folgende Abmessungen genannt:

| | |
|---|---|
| Außendurchmesser | 6,0 mm |
| Welltiefe | 0,1 mm |
| Steigung | 3,4 mm |
| Wanddicke | 0,8 mm |

## Patentansprüche

1. Verfahren zur Herstellung eines optischen Kabels (1) oder eines Aufbauelementes für ein optisches Kabel, bei dem ein von einer Vorratsspule (4) abgezogenes Metallband (5) allmählich zu einem Schlitzrohr geformt wird, zumindest ein von einer weiteren Vorratsspule abgezogener Lichtwellenleiter (2) in das noch offene Schlitzrohr eingeführt wird, der Längsschlitz des Schlitzrohres durch Schweißen geschlossen und das geschweißte Metallrohr (3) mit zumindest einer Windung um eine zylindrische Scheibe (11) herumgelegt wird, wobei eine Überlänge des oder der Lichtwellenleiter (2) gegenüber dem Metallrohr (3) nach dem Schweißen erzeugt wird, **dadurch gekennzeichnet, daß** die Überlänge durch Einbringen von Sicken oder Dellen in das Metallrohr (3) oder durch Wellen des Metallrohres (3) hinter der zylindrischen Scheibe (11) erzeugt wird.

2. Verfahren nach Anspruch 1 **dadurch gekennzeichnet, daß** das Metallrohr (3) mit in sich geschlossenen einen Ring bildenden Sicken versehen wird.

3. Verfahren nach Anspruch 1, **dadurch gekennzeichnet, daß** das Metallrohr (3) mit einer ring- oder schraubenlinienförmig verlaufenden Wellung versehen wird.

4. Verfahren nach einem der Ansprüche 1 bis 3, **dadurch gekennzeichnet, daß** eine vorbestimmbare Überlänge der Lichtwellenleiter (2) durch die Tiefe und/oder den Abstand der Wellung, der Eindellungen oder der Sicken voneinander erzeugt wird.

5. Verfahren nach Anspruch 1 oder einem der folgenden, **dadurch gekennzeichnet, daß** die Herstellung der Überlänge in einem gesonderten Arbeitsgang nach dem Schweißen erfolgt.

6. Verfahren nach einem der Ansprüche 1 bis 5, **dadurch gekennzeichnet, daß** in das noch offene Schlitzrohr eine gelartige Füllmasse eingebracht wird.

7. Verfahren nach einem der Ansprüche 1 bis 6, **dadurch gekennzeichnet, daß** als Metallrohr (3) ein Aluminiumrohr mit einem Verhältnis von Außendurchmesser zu Wanddicke zwischen 5 bis 10 hergestellt wird.

8. Anwendung des Verfahrens nach einem der Ansprüche 1 bis 7 zur Herstellung eines Aufbauelementes für ein optisches Luftkabel mit einem zentral angeordneten Metallrohr (17) mit Lichtwellenleitern (2) und auf das Metallrohr (17) aufgeseilten Metalldrähten (18).

## Claims

1. A method for the fabrication of an optical cable (1) or a construction element for an optical cable, wherein a metal band (5) drawn from a supply reel (4) is gradually shaped into a slotted tube, at least one optical wave guide (2) is drawn from another supply reel and introduced into the slotted tube while it is still open, the longitudinal slit is welded shut, and the welded metal tube (3) is wound around a cylindrical disk (11) at least once, creating an overlength of the optical wave guide(s) (2) with respect to the metal tube (3) after the welding, **characterized in that** the overlength is created by applying beads or indentations to the metal tube (3) or by creating a ripple in the metal tube (3) after the cylindrical disk (11).

2. A procedure according to claim 1 **characterized in that** the metal tube (3) is equipped with a closed ring of beads.

3. A procedure according to claim 1 **characterized in that** the metal tube (3) is equipped with ring-shaped or spiral-shaped ripple.

4. A procedure according to one of the claims 1 to 3, **characterized in that** a pre-determinable overlength of the optical wave guides (2) can be created by the depth and/or the spacing of the ripple, the indentations, or the beads.

5. A procedure according to one of the claims 1 to 4, **characterized in that** the creation of the overlength takes place in a separate processing step after the welding.

6. A procedure according to one of the claims 1 to 5, **characterized in that** the slotted tube is filled with a jellylike filler while it is still open.

7. A procedure according to one of the claims 1 to 6, **characterized in that** an aluminum tube is used as a metal tube (3), wherein the tube has a ratio of outer diameter and wall thickness between 5 and 10.

8. The application of the procedure according to one of the claims 1 to 7, in order to produce a construction element for an optical air cable with a central metal tube (17) with optical wave guides (2) and metal wires (18) stranded to the metal tube (17).

## Revendications

1. Procédé pour la confection d'un câble optique (1) ou d'un composant pour un câble optique dans lequel une bande métallique (5) déroulée d'une bobine de réserve (4) est formée progressivement en un tube fendu, dans lequel au moins une fibre optique (2) déroulée d'une autre bobine de réserve est introduite dans le tube fendu encore ouvert, la fente longitudinale du tube fendu est fermée par soudage et le tube métallique (3) soudé est enroulé avec au moins une spire autour d'un disque cylindrique (11), une surlongueur de la ou des fibres optiques (2) par rapport au tube métallique (3) étant générée après le soudage, **caractérisé en ce que** la surlongueur est créée par des moulures ou des creux dans le tube métallique (3) ou par des ondulations du tube métallique (3) après le disque cylindrique (11).

2. Procédé selon la revendication 1, **caractérisé en ce que** le tube métallique (3) est doté de moulures formant une bague fermée en soi.

3. Procédé selon la revendication 1, **caractérisé en ce que** le tube métallique (3) est doté d'une ondulation annulaire ou hélicoïdale.

4. Procédé selon l'une des revendications 1 à 3, **caractérisé en ce que** une surlongueur prédéterminable des fibres optiques (2) est produite par la profondeur et / ou la distance entre l'ondulation, les creux ou les moulures.

5. Procédé selon l'une des revendications 1 à 4, **caractérisé en ce que** la création de la surlongueur est réalisée dans une opération de travail séparée après le soudage.

6. Procédé selon l'une des revendications 1 à 5, **caractérisé en ce que** produit de remplissage en forme de gel est introduite dans le tube fendu encore ouvert.

7. Procédé selon l'une des revendications 1 à 6, **caractérisé en ce que,** pour le tube métallique (3), un tube en aluminium avec un rapport entre diamètre extérieur et épaisseur de paroi entre 5 et 10 est fabriqué.

8. Application du procédé selon l'une des revendications 1 à 7 pour la confection d'un élément pour un câble optique aérien avec un tube métallique (17) disposé de façon centrale, avec des fibres optiques (2) et des fils métalliques (18) toronnés sur le tube métallique (17).
